# EUROPEAN PATENT APPLICATION

(11) **EP 1 770 322 A2**
(43) Date of publication of application: **04.04.2007**
(21) Application number: 06255070.2
(22) Date of filing: 29.09.2006
(51) Int. Cl.: F16L 47/24

(54) **Method of coupling plastic components to metal tubing**

(30) Priority: 30.09.2005 US 722108 P
(71) Applicant: DANA CORPORATION, Toledo, OH 43615 (US)
(72) Inventor: Stieler, David Carl, Oakland, Michigan 48362 (US); Sleep, Dale L., Hamilton, Indiana 46038 (US)
(74) Representative: Cheyne, John Robert Alexander M.

(57) **Abstract**

A method of coupling tubular bodies is provided, particularly for use in fluid handling systems requiring a fluid-tight, pressurized joint. One tubular body (12A) is made from a polymer. The other tubular body (14A) is formed as a bare metallic body (e.g., aluminum tubing). The tubular bodies are positioned relative to one another (e.g., the metallic tubular body may be inserted within the polymeric tubular body). The tubular bodies are then joined together by generating heat (e.g., through induction welding) to cause heat transfer from the metallic tubular body to the polymeric tubular body thereby resulting in deformation of the polymeric tubular body and bonding of the polymeric tubular body to the metallic tubular body.

## Description

This application claims priority to pending U.S. Provisional Patent Application Serial No. 60/722,108 filed on September 30, 2005, the entire disclosure of which is incorporated herein by reference.

### BACKGROUND OF THE INVENTION

### 1. Field of the Invention

This invention relates to methods for coupling two or more components and, in particular, to a method for coupling polymeric components (including tubing) to metal tubing while providing a fluid tight, pressurized joint.

### 2. Discussion of Related Art

Motor vehicles may include various fluid handling systems, such as, but not limited to, fuel systems, power steering systems, heating and cooling systems, and hydraulic braking systems. These fluid handling systems may require the attachment of various tubular bodies, connectors and other components to create robust seals and fluid tight, pressurized joints for fluid handling.

A variety of methods are known for joining components of a fluid handling system. For example, ITT Industries, Inc. has previously developed a process under the trademark "POSIBOND" that utilizes spin welding to join two components. Spin welding does not, however, allow for the simultaneous creation of multiple joints and therefore requires an undesirable amount of time to create multiple joints. Spinwelding typically requires a bonding agent as well. Ashland, Inc. has previously developed a process under the registered trademark "EMABOND" using induction welding to joint two thermoplastic bodies. This process, however, requires the use of a bonding agent or resin disposed between the thermoplastic bodies and having metallic particles.

The inventors herein have recognized a need for a method for coupling components in a fluid handling system that will minimize and/or eliminate one or more of the above-identified deficiencies.

### SUMMARY OF THE INVENTION

The present invention relates to a method for coupling first and second components of a fluid handling system.

A method in accordance with the present invention includes the steps providing a first component, the first component comprising a tubular body having a bare metallic surface, and providing a second component, the second component made from a polymer. The method further includes the step of positioning one of the first and second components relative to the other of the first and second components. Finally the method includes the step of generating heat to deform the second component and bond the second component to the bare metallic surface of the first component.

A method in accordance with the present invention has significant advantages relative to conventional manufacturing methods for coupling fluid system components. The method allows two components to be joined together without the use of a bonding agent or other intermediary. The method also allows multiple, fluid tight joints to be formed simultaneously thereby reducing assembly time.

These and other advantages of this invention will become apparent to one skilled in the art from the following detailed description and the accompanying drawings illustrating features of this invention by way of example.

### BRIEF DESCRIPTION OF THE DRAWINGS

Figure 1 is a cross-sectional view illustrating one embodiment of a fluid coupling formed in accordance with the present invention.

Figure 2 is a cross-sectional view illustrating another embodiment of a fluid coupling formed in accordance with the present invention.

Figure 3 is a cross-sectional view illustrating yet another embodiment of a fluid coupling formed in accordance with the present invention.

Figure 4 is a cross-sectional view illustrating yet another embodiment of a fluid coupling formed in accordance with the present invention.

Figure 5 is a cross-sectional view illustrating yet another embodiment of a fluid coupling formed in accordance with the present invention.

Figure 6 is a cross-sectional view illustrating yet another embodiment of a fluid coupling formed in accordance with the present invention.

Figure 7 is a cross-sectional view illustrating yet another embodiment of a fluid coupling formed in accordance with the present invention.

Figure 8 is a cross-sectional view illustrating yet another embodiment of a fluid coupling formed in accordance with the present invention.

Figure 9 is a cross-sectional view illustrating yet another embodiment of a fluid coupling formed in accordance with the present invention.

Figure 10 is a flow chart illustrating a method in accordance with the present invention.

Figure 11 is a plan view illustrating an embodiment of a fluid coupling formed in accordance with a related invention.

Figure 12 is a plan view illustrating an embodiment of a fluid coupling formed in accordance with a related invention.

Figure 13 is a cross-sectional view illustrating an embodiment of a fluid coupling formed in accordance with a related invention.

### DETAILED DESCRIPTION OF EMBODIMENTS OF THE INVENTION

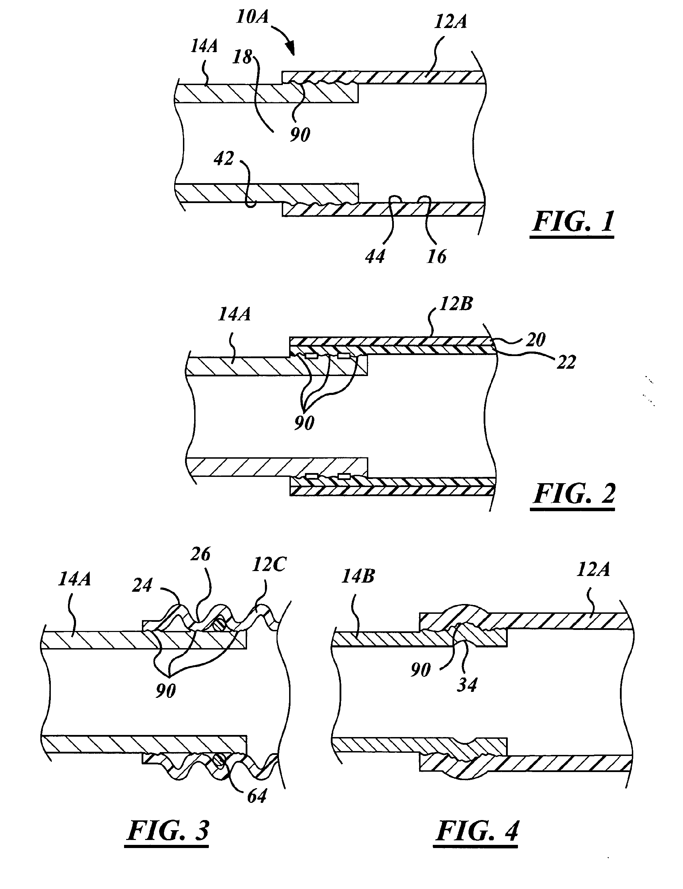

Referring now to the drawings wherein like reference numerals are used to identify identical components in the various views, Figures 1 illustrates one embodiment of a fluid coupling 10A formed in accordance with the present invention. Fluid coupling 10A may be provided to transport fluid in a fluid handling system of a motor vehicle. Fluid handling systems constructed in accordance with the present invention may be particularly adapted for use in an automobile or light truck, but it should be understood that the inventive method described herein could be used for a variety of fluid handling systems for vehicular and non-vehicular applications. Coupling 10A includes at least two components 12A, 14A.

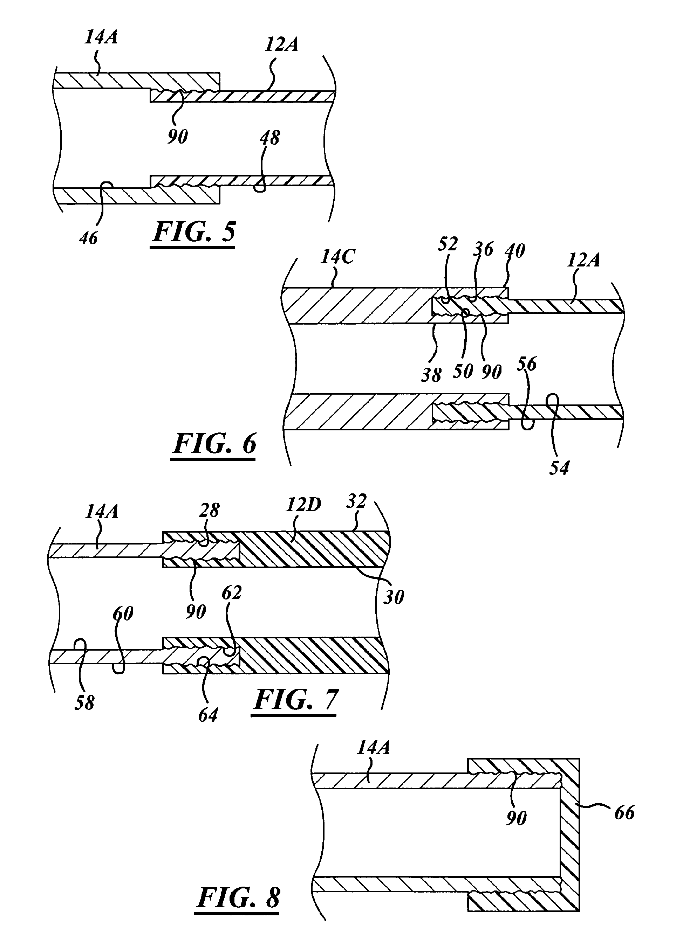

Component 12A may comprise flexible tubing for use in fluid handling. Component 12A is made from a polymer such as a plastic, and particularly a thermoplastic, and may be made of nylon. Component 12A may be cylindrical in shape may define a circular fluid passageway 16. Component 12A defines at least one opening 18 configured for insertion of component 14A. Component 12A may define multiple openings 18 (e.g, at opposite longitudinal ends of component 12A or at an intermediary point along component 12A) to allow interconnection of multiple components similar to component 14A. Component 12A may comprise monowall tubing as illustrated in Figure 1. Referring to Figure 2, in accordance with another embodiment of the invention, a component 12B may be formed as a laminate having multiple layers 20, 22 of the same or different polymeric materials. Referring again to Figure 1, component 12A may be substantially straight. Component 12A may also be formed to provide a fluid pathway that is not straight. Referring to Figure 3, in another embodiment of the invention, a component 12C may be corrugated defining a plurality of radially outer peaks 24 and radially inner valleys 26. Referring to Figure 7, in yet another embodiment of the invention, a component 12D may be formed with a recess 28 formed in one longitudinal end between the radially inner and outer surfaces 30, 32 of component 12D.

Referring again to Figure 1, component 14A provides relatively rigid tubing for use in fluid handling. Component 14A may be made from a metal such as aluminum and has a bare metallic surface for part or all of component 14A at which one or more bonds or joints are eventually formed with component 12A. Component 14A may be straight throughout its longitudinal length. Referring to Figure 4, however, in another embodiment of the invention a component 14B may include an end form 34 in the form of a bead or other structure to facilitate formation of a sealed joint.
Referring to Figure 6, in another embodiment of the invention, a component 14C may be formed with a recess 36 formed in one longitudinal end between the radially inner and outer surfaces 38, 40 of component 14C.

Referring again to Figure 1, in one embodiment of the invention, one end of component 14A is disposed within one end of component 12A and a bond is formed between the radially outer bare metallic surface 42 of component 14A and the radially inner surface 44 of component 12A. Referring to Figure 5, in another embodiment of the invention, one end of component 12A may be inserted within one end of component 14A and a bond formed between the radially inner bare metallic surface 46 of component 14A and the radially outer surface 48 of component 12A. Referring to Figure 6, in another embodiment of the invention, component 12A may be inserted into recess 36 of component 14C and a bond formed between bare metallic surfaces 50, 52 of component 14C and the radially inner and outer surfaces 54, 56 of component 12A. Referring to Figure 7, in another embodiment of the invention, component 14A may be inserted into recess 28 of component 12D and a bond formed between the radially inner and outer bare metallic surfaces 58, 60 of component 14A and the surfaces 60, 62 of component 12D.

As mentioned hereinabove with reference to Figure 4, component 14B may be formed with an end form 34 to facilitate sealing. Referring again to Figure 3, additional or alternative sealing may be provided by using one or more seals 64 such as O-ring seals. Although seals 64 are only shown in Figure 3, it should be understood that similar seals 64 could be used in any of the embodiments shown herein. Further, although one advantage of the present invention is to ability to form a sealed joint without the use of an intermediate bonding agent, a bonding agent such as the bonding agent sold under the registered trademark "EMABOND" by Ashland, Inc. could be positioned between any of tubular bodies 12A, 12B, 12C or 12D and tubular bodies 14A, 14B, or 14C to assist in formation of a sealed joint.

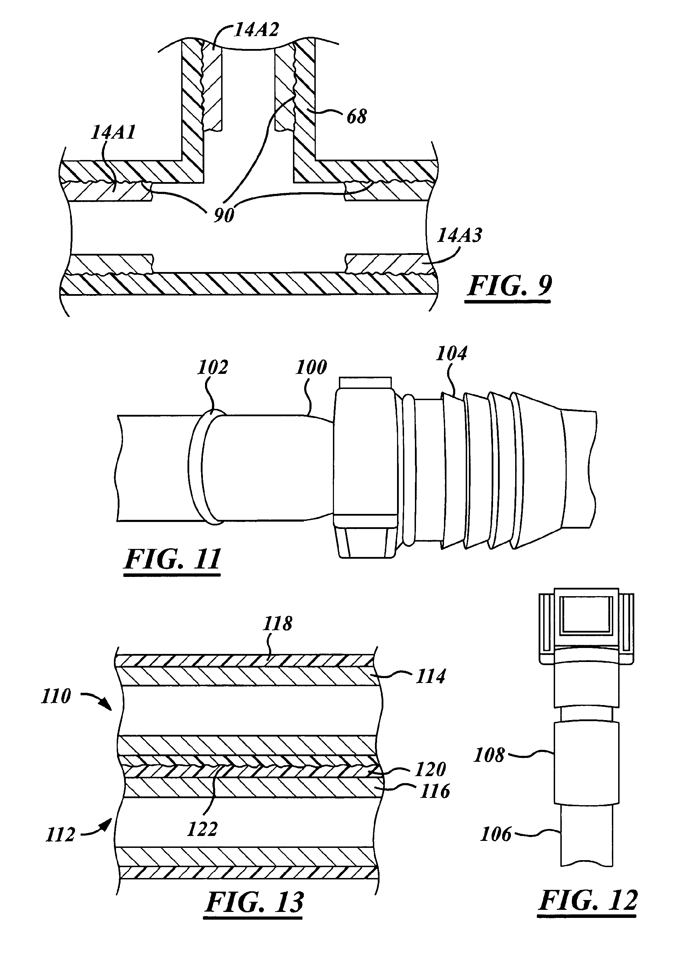

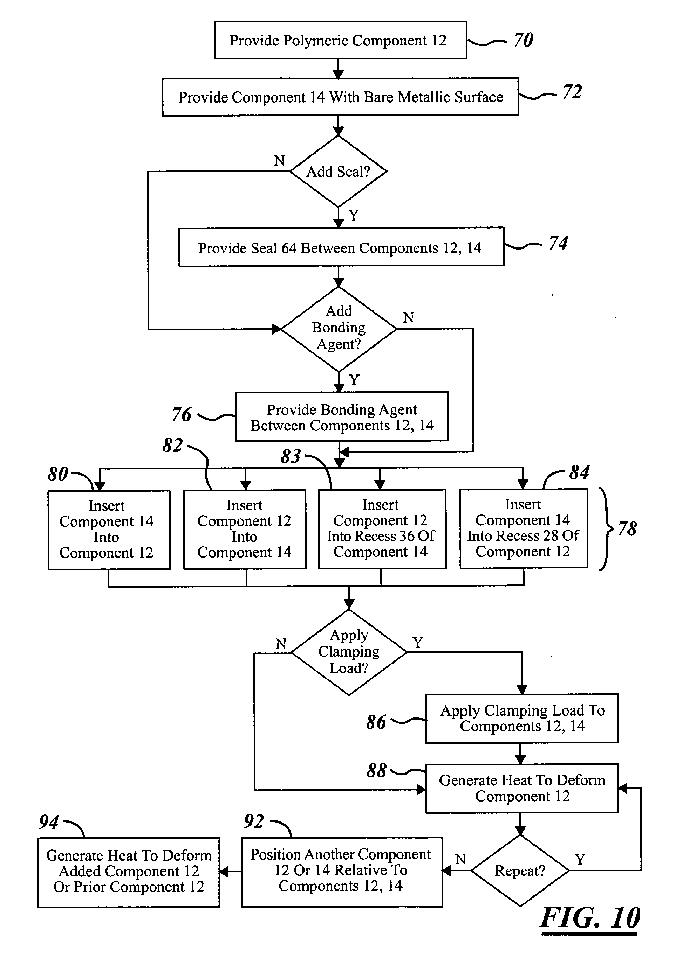

The above described embodiments of fluid couplings have generally described and illustrated couplings in which a tubular polymeric component having a fluid passageway, such as component 12A, is bonded to a tubular component, such as component 14A, having a bare metallic surface at which a bond is formed between the components. Referring to Figure 8, in another embodiment a polymeric component 66 forming an end cap may be joined to component 14A to close one end of component 14A. Referring to Figure 9, in another embodiment a polymeric component 68 forming a T-connection may be used to join a plurality of components 14A1, 14A2, 14A3. Additional forms of polymeric components such as mounting brackets or other connectors may also be joined to the various metallic component using the inventive method.

Referring now to Figure 10, a method of coupling first and second components in accordance with the present invention is described and illustrated. The method begins with the steps 70, 72 of providing components 12A (or 12B or 12C or 12D or 66 or 68), 14A (or 14B or 14C). As discussed hereinabove, component 12A is made from a polymer and may be a monowall structure or a multi-layer, laminated structure and may be straight, corrugated or otherwise formed. At least a portion of component 14A has a bare metallic surface and component 14A may be straight or formed with an end form 34 to facilitate formation of a sealed joint. Alternatively, the inventive method may include the step 74 of providing a seal 64 between components 12A, 14A and/or the step 76 of inserting a bonding agent between tubular bodies 12A, 14A.

The inventive method may continue with the step 78 of positioning at least one of components 12A, 14A, relative to the other of components 12A, 14A. In accordance with one embodiment of the invention, step 78 may include the substep 80 of inserting component 14A into opening 18 of component 12A (see Fig. 1). In accordance with another embodiment of the invention, step 78 may include substep 82 of inserting component 12A into an opening of component 14A (see Fig. 5). In accordance with yet another embodiment of the invention, step 78 may include the substep 83 of inserting component 12A into a recess 36 in one end of component 14C (see Fig. 6). In accordance with yet another embodiment of the invention, step 78 may include the substep 84 of inserting component 14A into a recess 28 in one end of component 12D (see Fig. 7).

Prior to forming the sealed joint between components 12A (or 12B or 12C or 12D or 66 or 68), 14A (or 14B or 14C), it may be desirable to apply a clamping load in the area of the joint to be formed. Accordingly, the inventive method may include the step 86 of applying a clamping load to the interface between components 12A (or 12B or 12C or 12D or 66 or 68), 14A (or 14B or 14C). The load may be applied using any of a variety of conventional tools and/or methods known in the art. The load may also be applied at multiple locations along components 12A (or 12B or 12C or 12D or 66 or 68), 14A (or 14B or 14C).

The inventive method continues with the step 88 of generating heat to deform the polymeric component 12A (or 12B or 12C or 12D or 66 or 68) and bond the polymeric component to the bare metallic surface of component 14A (or 14B or 14C). In a preferred embodiment, heat is generated by energizing a conductor proximate the tubular bodies 12A (or 12B or 12C or 12D or 66 or 68), 14A (or 14B or 14C). The conductor may, for example, comprise a coil through which current is fed from a power source. The inventive method thus employs a form of induction welding. The inventors herein have recognized that the resulting electromagnetic field providing inductive energy to the metallic component 14A will result in heat transfer to the polymeric component and, at sufficient levels, will result in deformation of the polymeric component through melting. This results in one or more bonds or joints or weld rings 90 between components 12A (or 12B or 12C or 12D or 66 or 68), 14A (or 14B or 14C) as shown in Figures 1-9. In another embodiment of the invention heat is generated by moving one of the components relative to the other component (e.g., through vibrational welding). In yet another embodiment of the invention heat is generated by directing a laser proximate an interface between said the components. The resulting joints 90 have significant strength. Further, the joints 90 form hermetic seals such that fluid handling components may have fluid inlets and outlets sealingly coupled as shown in Figure 1. Referring again to Figure 10, step 88 may be easily repeated one or more times to insure a proper hermetic seal is formed.

The inventive method may be used to form a coupling between two components 12A (or 12B or 12C or 12D or 66 or 68), 14A (or 14B or 14C). In accordance with one aspect of the invention, however, the inventive method may be used to couple additional tubular bodies. Accordingly, the method may continue with the step 92 of positioning another component relative to two other components. For example, another component 14A or 14B may be inserted into an opposite end of any of components 12A, 12B, 12C, 12D.
Alternatively, another component 12A or 12B may be inserted into an opposite end of tubular body 14A. The method may further continue with the step 94 of generating heat to deform the polymeric component and form another bond between the existing components and the added component. Where induction welding is used to generate heat, step 94 may include the substep of energizing one of (i) the conductor used in coupling the first two components and (ii) a second conductor, proximate the added component and the component to which it is being joined. Figure 10 illustrates steps 92, 94 as occurring subsequent to step 88. Step 92 alternatively may be performed prior to step 88 and steps 88, 94 may occur substantially simultaneously allowing the formation of multiple, fluid tight joints in a more efficient manner than was previously known. It should also be understood that, although not illustrated in Figure 7, steps similar to any or all of steps 74, 76, 78 may be performed prior to step 94 to assist in formation of the fluid coupling.

A method in accordance with the present invention has significant advantages relative to conventional manufacturing methods for coupling tubular bodies. The method allows two tubular bodies to be joined together without the use of a bonding agent or other intermediary. The method also allows multiple, fluid tight joints to be formed simultaneously thereby reducing assembly time. Further, the inventive method forms a strong, fluid tight joint that is capable of withstanding pressurized applications without the need for complex mechanical seals, while simultaneously reducing the cost and time of conventional manufacturing processes. It has even been determined that the inventive method described herein can be used to bond a plastic component such as component 12A, 12B, 12C, 12D, 66, 68 to the bare metallic surface of a component 14A, 14B, 14C despite the presence of oil or other lubricants. Accordingly, previous manufacturing steps requiring cleaning of components 14A, 14B, 14C to remove oil or other substances can be minimized.

Referring now to Figures 11-13, additional related inventions are briefly described and illustrated. Referring to Figure 11, a fluid coupling including components 100, 102 is illustrated. Component 100 may comprise rigid tubing for use in fluid handling. Component 100 may comprise multi-layer tubing having a metal inner layer (preferably aluminum) and a polymeric outer layer (preferably a plastic and more preferably a thermoplastic such as nylon). The outer polymeric layer may be bonded to the inner metallic layer and may be extruded over the inner metallic layer. As used in this context "inner" and "outer" refer only to the relative positions of the layers to one another. Component 102 may comprise an annular plastic bead that is bonded to the outer surface of component 100. As discussed in copending U.S. patent application numbers 11/042,013 and 11/042,014, the inventors have discovered that generating heat in the metallic layer of component 100 will cause deformation of the polymeric layer (and possibly component 102 as well) to bond component 102 to component 100. This heat is preferably generated through induction welding, but may be provided through alternative methods such as vibrational welding or lasers as discussed above. Component 102 can be used as a stop or as an end form to facilitate retention and sealing of other tubes and connectors, such as connector 104, over the beaded end of the tube. The use of a plastic bead coupled to the tubing eliminates the manufacturing difficulties of forming beads in the tubing itself as well as stresses in the tubing. It should be understood from the discussion hereinabove that component 100 may alternatively comprise a tubular body having a bare metallic surface to which component 102 may be bonded at sufficient heat.

Referring to Figure 12, a fluid coupling including components 106, 108 is illustrated. Component 106 may again comprise rigid tubing for use in fluid handling. Component 106 may comprise a metal tube having a bare metallic surface or a multi-layer tubing having a metal inner layer (preferably aluminum) and a polymeric outer layer (preferably a plastic and more preferably a thermoplastic such as nylon) similar to component 100 discussed above. Component 108 may comprise a fitting or a quick connect configured to receive and connect another component to component 106. Component 108 is preferably a polymeric component. Again, generating heat in the metallic layer of component 106 will cause deformation of the polymeric layer and/or component 108 to bond component 108 to component 106. The use of polymeric fittings and quick connects together with heat based bonding eliminates the need for end forming component 106 as well as washing and brazing operations.

Referring to Figure 13, a fluid coupling is illustrated including multiple rigid tubes 110, 112 for use in fluid handling. Tubes 110, 112 may again comprise multi-layer tubes having a metal inner layer (preferably aluminum) 114, 116, respectively, and a polymeric outer layer (preferably a plastic and more preferably a thermoplastic such as nylon) 118, 120, respectively. The outer polymeric layers 118, 120 may be bonded to the inner metallic layers 114, 116, respectively, and may be extruded over the inner metallic layers 114, 116. As used in this context "inner" and "outer" again refer only to the relative positions of the layers to one another. Generating heat in the metallic layer 114, 116 of one or both of tubes 110, 112 will cause deformation of the polymeric layers 118, 120 to bond tubes 110, 112 at a joint 122. Again, heat is preferably generated through induction welding although heat may be generated in other ways. Coupling multiple plastic coated metal tubes together reduces space requirements and the need for connectors either within a finished product or during shipping for assembly into a finished product. Although tubes 110, 112 are shown as substantially parallel, it should be understood that tube 110 could be oriented relative to tube 112 in a variety of ways.

While the invention has been shown and described with reference to one or more particular embodiments thereof, it will be understood by those of skill in the art that various changes and modifications can be made without departing from the spirit and scope of the invention.

## Claims

1. A method of coupling first and second components of a fluid handling system, comprising the steps of:
providing said first component, said first component comprising a tubular body having a bare metallic surface;
providing said second component, said second component made from a polymer;
positioning one of said first and second components relative to the other of said first and second components; and,
generating heat to deform said second component and bond said second component to said bare metallic surface of said first component.

2. The method of claim 1 wherein said bare metallic surface comprises aluminum.

3. The method of claim 1 wherein said polymer comprises nylon.

4. The method of claim 1, further comprising the steps of:
providing a third component, said third component comprising a tubular body having a bare metallic surface;
positioning one of said second and third components relative to the other of said second and third components; and,
generating heat to deform said second component and bond said second component to said bare metallic surface of said third component.

5. The method of claim 4 wherein said step of generating heat to deform said second component and bond said second component to said bare metallic surface of said first component and said step of generating heat to deform said second component and bond said second component to said bare metallic surface of said third component occur substantially simultaneously.

6. The method of claim 1, further comprising the steps of:
providing a third component, said third component made from a polymer;
positioning one of said first and third components relative to the other of said first and third components; and,
generating heat to deform said third component and bond said third component to said bare metallic surface of said first component.

7. The method of claim 6 wherein said step of generating heat to deform said second component and said step of generating heat to deform said third component occur substantially simultaneously.

8. The method of claim 1 wherein said second component is directly bonded to said first component.

9. The method of claim 1 wherein said generating step includes the substep of energizing a conductor proximate said first and second components to generate heat transfer from said first component to said second component.

10. The method of claim 1 wherein said second component comprises an end cap.

11. The method of claim 1, further comprising the step of applying a clamping load to said first and second components.

12. The method of claim 1 wherein said positioning step includes the substep of inserting one of said first and second components within an opening in another of said first and second components.

13. The method of claim 12 wherein said one component has an end form formed on a first end of said one component.

14. The method of claim 1 wherein said positioning step includes the substep of inserting one end of one of said first and second components into a recess formed in one end of another of said first and second components between radially inner and outer surfaces of said another component, and said generating step bonds said another component to said one component on radially inner and outer surfaces of said one component.

15. The method of claim 1 further comprising the step of:
providing a seal between said first component and said second component prior to said generating step.

16. The method of claim 1, further comprising the step of inserting a bonding agent between said first and second components prior to said generating step.

17. The method of claim 1, further comprising the step of repeating said generating step.

18. The method of claim 1, further comprising the step of providing a lubricant on said bare metallic surface of said first component prior to said generating step.

19. A method of assembling a fluid coupling, comprising the steps of:
providing a first component, said first component comprising a metallic tubular body;
providing a second component, said second component comprising a polymeric ring;
positioning said second component around said first component;
generating heat to bond said second component to said first component; and,
providing a third component, said third component comprising a tubular body;
inserting said first and second components into said third component until said third component securely engages said second component.

20. A method of packaging first and second components of a fluid handling system, comprising the steps of:
providing said first and second components, said first and second components each comprising a tubular body defining a fluid passageway and formed as a laminate having an inner metallic layer and an outer polymeric layer;
positioning one of said first and second components relative to the other of said first and second components; and,
generating heat to deform said polymeric layers of said first and second components and bond said first and second components to one another.
